# EUROPEAN PATENT APPLICATION

(11) **EP 4 230 768 A1**
(43) Date of publication of application: **23.08.2023**
(21) Application number: 20833935.8
(22) Date of filing: 28.10.2020
(51) Int. Cl.: C25B 1/04, C25B 9/15, C25B 9/19, C25B 9/60, C25B 11/036

(54) **FLOATING FLOW-GUIDE PLATE FOR ELECTROCHEMICAL CELLS**

(30) Priority: 14.10.2020 PT 2020116826
(71) Applicant: Fusion Fuel Portugal, S.A., 2715-376 Almargem do Bispo (PT)
(72) Inventor: Ferreira Silva, Jaime Domingos, 1495-161 Lisboa (PT)
(74) Representative: Carvalho Franco, Isabel
(86) International application number: PCT/IB2020/060096
(87) International publication number: WO 2022/079485

(57) **Abstract**

This invention refers to a floating flow field plate (3), characterised by two open channels (8) running along the lateral zones (101) of the surface of the flow field plate (100), by a series of troughs and/or ridges that run along the central zone (102) of the surface of the flow field plate (100), communicating with both channels (8), allowing the flow of fluids between the said channels (8), by at least one slot (9) running around the surface perpendicular to the surface of the flow field plate (100), and by an elastic gasket (4) housed in the slot (9).

## Description

This invention relates to electrochemical cells, namely a proton exchange membrane water electrolysers (membranes known in the industry by the English abbreviation PEM). This type of device typically consists of two cavities, an anodic cavity and a cathodic cavity, separated by the PEM.

Both surfaces of the PEM are coated in fine, porous, electroconductive layers. One of the layers contains a water oxidation catalyst, making it an anode, and the other layer contains a proton reduction to hydrogen molecular catalyst, making it a cathode.

In order to introduce the reactant, i.e., the water, into the anodic cavity, one typically uses plates with a pattern of channels and ribs on one side or, more commonly, on both sides, when they are known as bipolar plates. These plates are made entirely or partially of electroconductive materials and are placed in close contact with the cathodes and anodes so as to ensure a good electrical contact so that the electrical current required to produce the electrolysis meets the least resistance.

The bipolar plates within an electrolyser are exposed to a very corrosive environment, which requires the use of materials that resist corrosion such as graphite or metals such as titanium and stainless steel with protective coatings, so as to provide them with the longevity required to make them practical devices. Such materials are expensive and bipolar plates made from them come in simple, flat designs, to ensure they are economically viable. The possible versions of the invention include at least one floating flow field plate, 3, for electrochemical cells, comprised on the surface of the flow field plate, 100, of a central zone, 102, and two lateral zones, 101. The central zone, 102, contains a series of troughs and/or ridges that run along the length of the floating flow field plate, 3, and it is bordered by the two lateral zones, 101, each of which has an open channel, 8, that has a near semi-circular or semi-oval cross-section.

The floating plate, 3, also contains, on the edges perpendicular to the surface of the flow field plate, 100, at least one slot, 9, which runs round the entire plate and houses the elastic gasket, 4, that has a circular or other appropriate cross-section, ensuring the reaction cavity is watertight.

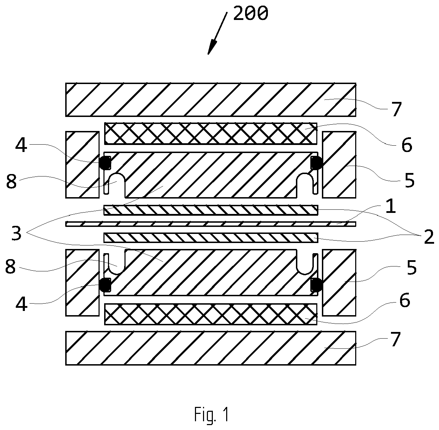

In the preferred version of the invention, Fig.1, a water electrolyser, 200, consists of a PEM, 1, separating two cavities whose configuration is basically symmetrical, so only one will be described below.

The floating flow field plate, 3, is housed in an outer casing, 5, and may be freely positioned along the axis perpendicular to the plane of the PEM, 1, and the only constraint is its positioning in the plan parallel to that of the PEM, 1.

The lid of the outer casing, 7, closes the compressible material, 6, which, since it is housed in the outer casing, 5, presses the floating flow field plate, 3, against the unipolar plate, 2, which in turn presses against the PEM, 1, with the contact force needed to ensure there is close contact between the UPP, 2, and the PEM, 1, so that the electrical contact resistance between them is as low as possible thus lowering the operating voltage of the electrolysis.

The flow of reactant enters the cavity through one end of the channels, 8, is distributed by the troughs and/or the ridges in the central zone, 102, coating the active area of the PEM, 1, and then the reactant is collected, along with the products of the electrolysis, by the channel in the diametrically opposite lateral zone, before leaving the cavity through one end of that channel.

The floating flow field plates, 3, may be made from a polymer, a mixture of polymers or copolymers, thermosetting polymers, or, preferably, thermoplastic polymers resistant to high temperatures, such as PPS, PEEK, PSU, PES, PEI, PA6/6T, etc, or any other rigid material that does not conduct electricity, including metal alloys coated with electrically insulating layers.

Description of figures:
- Fig. 1: is a section of one version of the invention.

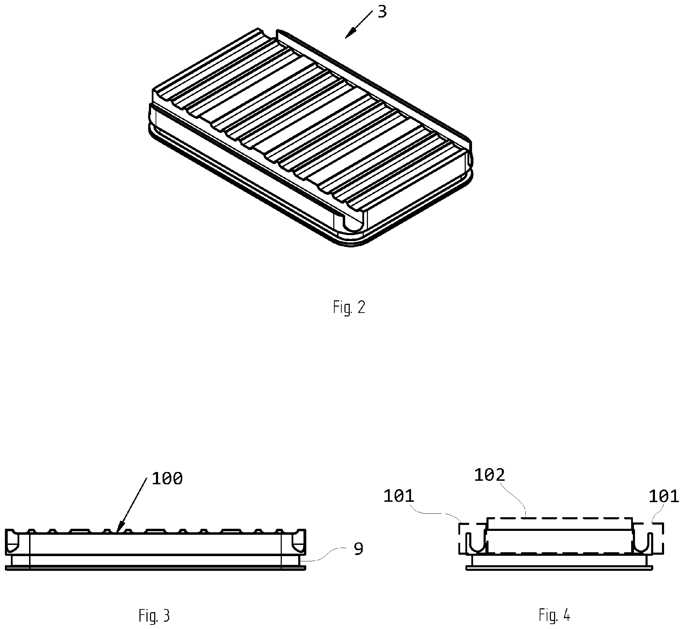

- Fig. 2: is an isometric view of the invention.
- Fig. 3: is a side view of the invention.
- Fig. 4: is a front view of the invention.

### Key to figures:

- 1-: Proton exchange membrane (PEM)
- 2-: Unipolar plate (UPP)
- 3-: Floating flow field plate
- 4-: Gasket
- 5-: Outer casing
- 6-: Compressible material
- 7-: Outer casing lid
- 8-: Open channel
- 9-: Slot for gasket
- 100-: Surface of flow field plate
- 101-: Lateral zone of flow field plate surface
- 102-: Central zone of flow field plate surface
- 200-: Water electrolyser

## Claims

1. Floating flow field plate (3), **characterised by** two open channels (8) running along the lateral zones (101) of the surface of the flow field plate (100), by a series of troughs and/or ridges that run along the central zone (102) of the surface of the flow field plate (100), communicating with both channels (8), allowing the flow of fluids between the said channels (8), by at least one slot (9) running around the surface perpendicular to the surface of the flow field plate (100), and by an elastic gasket (4) housed in the slot (9).

2. Floating flow field plate (3), as per claim 1, **characterised by** the gasket (4) which has a near circular cross-section or near rectangular, square, D-shaped or cross-shaped cross-section.

3. Floating flow field plate (3) as per claim 1, **characterised by** being made of a material that does not conduct electricity, such as a polymer, a mixture of polymers or copolymers, thermosetting polymers, or, preferably, thermoplastic polymers resistant to high temperatures, such as PPS, PEEK, PSU, PES, PEI, PA6/6T, etc, or any other rigid material that does not conduct electricity or is prevented from doing so, including metal alloys coated with electrically insulating layers.
